# EUROPÄISCHE PATENTANMELDUNG

(11) **EP 0 694 719 A1**
(43) Veröffentlichungstag der Anmeldung: **31.01.1996**
(21) Anmeldenummer: 95111309.1
(22) Anmeldetag: 19.07.1995
(51) Int. Cl.: F16J 15/12, F01P 11/00

(54) **Blechformteil**

(30) Priorität: 27.07.1994 DE 4426539; 07.03.1995 DE 19507974
(71) Anmelder: Elring Klinker GmbH, D-72581 Dettingen (DE)
(72) Erfinder: Bleidt, Michael, 72810 Dettingen/Erms (DE); Baudach, Detlev, 65510 Hunstetten (DE)
(74) Vertreter: Röhl, Wolf Horst, Dipl.-Phys., Dr.

(57) **Zusammenfassung**

Die Erfindung betrifft ein Blechformteil (9) zum abgedichteten Einbau zwischen zwei gegeneinander verspannbaren, mit im wesentlichen ebenen Dichtflächen (5, 6) versehenen Bauteilen (1, 2), das mit einem den Dichtflächen (5, 6) entsprechenden, einspannbaren Flansch (15) einstükkig ausgebildet ist. Damit sich die Verwendung von zusätzlichen Dichtungen erübrigt und andererseits eine sichere Abdichtung bei minimalem Einsatz von Beschichtungsmaterial sichergestellt wird, ist vorgesehen, daß der Flansch (15) mit einer entlang des Flansches (15) umlaufenden Sikkenanordnung (17, 18) versehen ist, wobei der Bereich der Dichtflächen (5, 6) nach der Formung des Blechformteils (9) zumindest einseitig elastomerbeschichtet und der Bereich außerhalb der Dichtflächen (5, 6) unbeschichtet ist, und daß das Material des Blechformteils (9) derart elastisch ist, daß im eingespannten Zustand im Bereich der Sickenanordnung (17, 18) in Richtung beider Dichtflächen (5, 6) wirkende Federkräfte resultieren.

## Beschreibung

Die Erfindung betrifft ein Blechformteil zum abgedichteten Einbau zwischen zwei gegeneinander verspannbaren, mit im wesentlichen ebenen Dichtflächen versehenen Bauteilen, das mit einem den Dichtflächen entsprechenden, einspannbaren Flansch einstückig ausgebildet ist.

Blechformteile, die unter Zuhilfenahme von Dichtungen zwischen zwei Dichtflächen von zwei Bauteilen eingespannt werden, werden vielfältig verwendet. So ist aus der DE-C-3 138 368 eine Thermostatanordnung für einen Brennkraftmotor bekannt, die ein korbartiges Blechgehäuse mit einem umlaufenden Flansch aufweist, der zwischen dem Zylinderblock oder -kopf und einem Anschlußstück eingespannt wir. Die Abdichtung erfolgt hierbei durch eine gesonderte Profildichtung. Die Verwendung einer zusätzlichen, häufig kompliziert geformten Dichtung ist jedoch aufwendig und umständlich.

Aus der DE-A-4 034 330 ist eine metallische Flachdichtung zum Einlegen zwischen zwei gegeneinander verspannnbare Bauteile mit ebenen Dichtflächen bekannt, die eine umlaufende Sicke trägt, um im eingebauten Zustand über eine Restfederkraft eine linienförmige Abdichtung zu erzielen. Die Dichtung ist beidseitig mit einer Elastomerbeschichtung versehen, die vor der Formgebung aufgebracht wurde, d.h. die Dichtung ist dadurch hergestellt, daß ein entsprechend beschichtetes Blech geformt und gestanzt wurde. Dies führt jedoch häufig zu Beschädigungen der Beschichtung durch Risse und dergleichen, wodurch sich Undichtigkeiten ausbilden können, und zu einem übermäßigen Gebrauch von Beschichtungsmaterial. Ein Recycling des bei der Dichtungsherstellung entstehenden Blechabfalls ist wegen der darauf vorhandenen Beschichtung aufwendig.

Aufgabe der Erfindung ist es, ein Blechformteil der eingangs genannten Art zu schaffen, das einerseits die Verwendung von zusätzlichen Dichtungen erübrigt und andererseits eine sichere Abdichtung bei minimalem Einsatz von Beschichtungsmaterial sicherstellt.

Diese Aufgabe wird entsprechend dem kennzeichnenden Teil des Anspruchs 1 dadurch gelöst, daß der Flansch mit einer entlang des Flansches umlaufenden Sickenanordnung versehen ist, wobei der Bereich der Dichtflächen nach der Formung des Blechformteils zumindest einseitig elastomerbeschichtet und der Bereich außerhalb der Dichtflächen unbeschichtet ist, und daß das Material des Blechformteils derart elastisch ist, daß im eingespannten Zustand im Bereich der Sickenanordnung in Richtung beider Dichtflächen wirkende Federkräfte resultieren.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt im Schnitt eine Thermostatanordnung für eine Brennkraftmaschine in eingebautem Zustand.
Fig. 2 zeigt eine Unteransicht der Thermostatanordnung von Fig. 1.
Fig. 3 zeigt einen Schnitt entsprechend der Linie II-II von Fig. 2.
Fig. 4 und 5 zeigen alternative Ausführungsformen der Sickenausbildung zu Fig. 3.

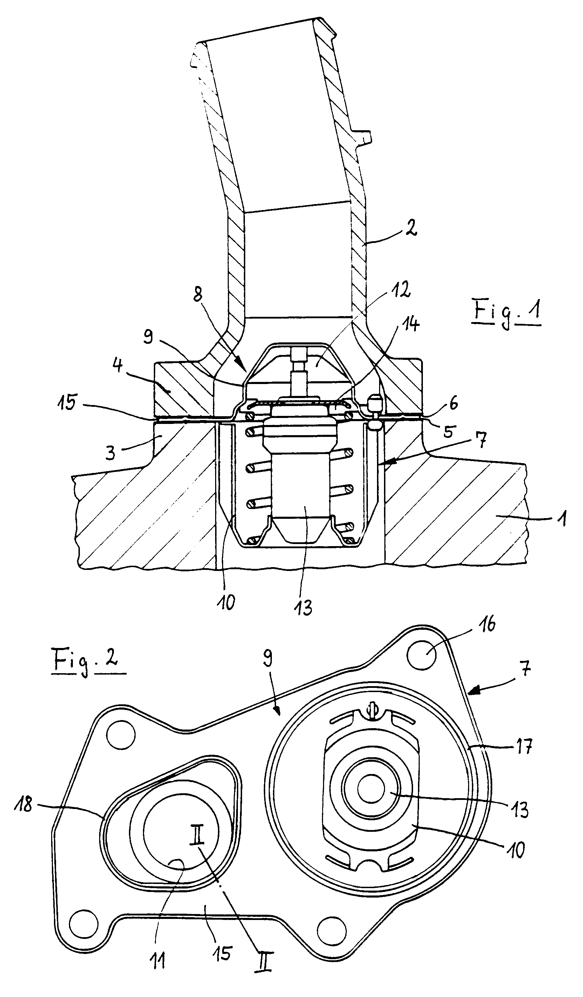

In Fig. 1 und 2 sind zwei gegeneinander verspannbare Bauteile 1, 2, nämlich ein Zylinderblock oder -kopf 1 einer Brennkraftmaschine und ein einen Doppelanschlußstutzen für zwei flexible Kühlmittelleitungen aufweisendes Anschlußstück 2 dargestellt, die jeweils einen Flansch 3, 4 mit ebenen Dichtflächen 5, 6 aufweisen, wobei die Flansche 3, 4 mittels (nicht dargestellter) Schrauben gegeneinander verspannbar sind und zwischen sich eine Thermostatanordnung 7 aufnehmen.

Die Thermostatanordnung 7 umfaßt ein korbartiges Blechgehäuse 8, das aus zwei Korbteilen 9, 10 besteht, die miteinander etwa durch Verstemmen von Befestigungslaschen verbunden sind. Das dem Anschlußstück 2 zugewandte Korbteil 9 weist zwei Durchtrittsöffnungen 11, 12 auf, von denen eine durch ein in dem Blechgehäuse 8 aufgenommenes Dehnstoffelement 13 mit einem von diesem entsprechend der Wärmeausdehnung des Dehnstoffelements 13 betätigbaren Verschlußteil 14 verschließbar ist.

Das Korbteil 9 besitzt einen umlaufenden und sich auch zwischen den beiden Durchtrittsöffnungen 11, 12 erstreckenden Flansch 15 mit Schraubenlöchern 16. Im Bereich des Flansches 15 ist um jede Durchtrittsöffnung 11, 12 herum verlaufend eine Sicke 17, 18 (Vollsicke) innenseitig von den Schraubenlöchern 16 vorgesehen.

Das Material des Korbteils 9 ist derart elastisch, etwa Federstahl, daß im eingespannten Zustand im Bereich der Sickenanordnung in Richtung beider Dichtflächen 5, 6 wirkende Federkräfte resultieren, d.h. daß aufgrund der verbleibenden Restfederkraft der Sicken 17, 18 um die jeweilige Durchtrittsöffnung 11, 12 herum einerseits durch den Scheitel der Sicken 17, 18 und andererseits durch die sickenfußseitigen Ränder geschlossene Dichtungslinien mit den Dichtungsflächen 5, 6 entstehen, wenn das Korbteil 9 eingespannt ist.

Die Formgebung des Korbteils 9 erfolgt beispielsweise durch Tiefziehen oder Pressen und Ausstanzen.

Das Korbteil 9 ist im Bereich der Sicken 17, 18 beidseitig mit einer nach der Formgebung aufgebrachten Elastomerschicht 19 versehen, die für die Mikroabdichtung zu den Dichtungsflächen 5, 6 hin sorgt. Die Elastomerschichten 19 werden vorzugsweise durch Sprühbeschichtung aufgebracht.

Die Elastomerschichten 19 befinden sich nur in dem Bereich, in dem auch eine Abdichtung wirksam wird, d.h. im Bereich des Flansches 15, der im Bereich der Dichtflächen 5, 6 zwischen diesen eingeklemmt wird. Hierdurch wird nicht nur der Einsatz des Elastomermaterial minimiert, sondern auch durch das Aufbringen hiervon auf das Korbteil 9 nach dessen Formgebung vermieden, daß durch die Formgebung Beschädigungen der Elastomerschichten 19 auftreten könnten. Die Dichtung wird auf diese Weise in das Blechformteil integriert, wodurch Teile eingespart werden und die Montage vereinfacht und erleichtert wird. Der vor dem Beschichten bei der Formgebung anfallende Blechabfall ist wegen fehlender Beschichtung leicht recyclebar.

Die Sicken 17, 18 können bei dem dargestellten Ausführungsbeispiel zu einer etwa achtförmigen Konfiguration miteinander verbunden sein.

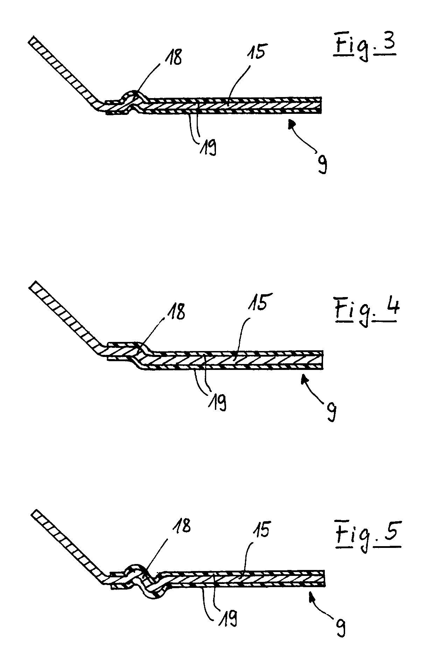

Wie in den Fig. 4 und 5 dargestellt, können die Sicken 17, 18 auch als Halb- oder Doppelsicken ausgebildet sein.

Anstelle von Korbteilen 9 kann es sich bei den Blechformteilen auch um Ölschwallbleche od.dgl. handeln. Es kann sich bei den Blechformteilen auch um Gehäusedeckel handeln, die zwischen einer Dichtfläche des zugehörigen Gehäuses und einem Ring od.dgl. Bauteil eingespannt werden.

Die zumindest einseitig aufgebrachte Elastomerbeschichtung besitzt üblicherweise eine Stärke von etwa 10 µm bis etwa 100 µm, insbesondere etwa 20 µm bis etwa 50 µm.

## Patentansprüche

1. Blechformteil (9) zum abgedichteten Einbau zwischen zwei gegeneinander verspannbaren, mit im wesentlichen ebenen Dichtflächen (5, 6) versehenen Bauteilen (1, 2), das mit einem den Dichtflächen (5, 6) entsprechenden, einspannbaren Flansch (15) einstückig ausgebildet ist, dadurch **gekennzeichnet**, daß der Flansch (15) mit einer entlang des Flansches (15) umlaufenden Sickenanordnung (17, 18) versehen ist, wobei der Bereich der Dichtflächen (5, 6) nach der Formung des Blechformteils (9) zumindest einseitig elastomerbeschichtet und der Bereich außerhalb der Dichtflächen (5, 6) unbeschichtet ist, und daß das Material des Blechformteils (9) derart elastisch ist, daß im eingespannten Zustand im Bereich der Sickenanordnung (17, 18) in Richtung beider Dichtflächen (5, 6) wirkende Federkräfte resultieren.

2. Blechformteil nach Anspruch 1, dadurch gekennzeichnet, daß die Elastomerbeschichtung (19) eine aufgesprühte Beschichtung ist.

3. Blechformteil nach Anspruch 1 oder 2, dadurch gekennzeichnet, daß die Sickenanordnung (17, 18) eine Sicke, eine Halbsicke und/oder eine Doppelsicke umfaßt.

4. Blechformteil nach einem der Ansprüche 1 bis 3, dadurch gekennzeichnet, daß die Sickenanordnung (17, 18) innenseitig von Schraubenlöchern (16) im Flansch (15) verläuft.

5. Blechformteil nach einem der Ansprüche 1 bis 3, dadurch gekennzeichnet, daß es ein Blechformteil eines Brennkraftmotors oder eines Getriebes, insbesondere ein Korbteil (9) einer Thermostatanordnung eines Brennkraftmotors oder ein Ölschwallblech ist.

6. Blechformteil nach einem der Ansprüche 1 bis 5, dadurch gekennzeichnet, daß bei mehreren Durchtrittsöffnungen (11, 12) jede von einer Sickenanordnung (17, 18) umgeben ist.
